(19) Europäisches Patentamt
European Patent Office
Office européen des brevets

(11) Veröffentlichungsnummer : **0 034 694**
**B1**

# (12) EUROPÄISCHE PATENTSCHRIFT

(45) Veröffentlichungstag der Patentschrift : **25.07.84**

(51) Int. Cl.³ : **C 01 B 33/28**

(21) Anmeldenummer : **81100173.4**

(22) Anmeldetag : **13.01.81**

## (54) Verfahren zur Herstellung von kristallinem Zeolith A.

(30) Priorität : **26.02.80 DE 3007044**

(43) Veröffentlichungstag der Anmeldung : **02.09.81 Patentblatt 81/35**

(45) Bekanntmachung des Hinweises auf die Patenterteilung : **25.07.84 Patentblatt 84/30**

(84) Benannte Vertragsstaaten : **AT BE CH DE FR GB IT LI NL SE**

(56) Entgegenhaltungen :
**DE-A- 2 651 420**
**DE-A- 2 651 436**
**DE-A- 2 651 485**
**DE-A- 2 704 310**
**DE-A- 2 734 296**
**SPRECHSAAL, Band 112, Nr. 12, 1979 F. WOLF et al "Zur Synthese und Anwendung zeolithischer Molekularsiebe, Teil I: Synthese" Seiten 917 bis 922**
**MANUFACTURING CHEMIST & AEROSOL NEWS, Band 49, Nr. 10, 1978 M. ETTLINGER et al. "Synthetic Zeolites as New Builders for Detergents" Seiten 51 bis 66**

(73) Patentinhaber : **Degussa Aktiengesellschaft**
**Weissfrauenstrasse 9**
**D-6000 Frankfurt am Main 1 (DE)**

**Henkel Kommanditgesellschaft auf Aktien**
**Postfach 1100 Henkelstrasse 67**
**D-4000 Düsseldorf-Holthausen (DE)**

(72) Erfinder : **Strack, Hans, Dr.**
**Siedlungsstrasse 26**
**D-8755 Alzenau (DE)**

**EP 0 034 694 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von kristallinem Zeolithpulver des Typs A.

Zeolith A ist ein kristallines Alkalialuminiumsilikat und entspricht in seiner Zusammensetzung der Formel

$$1{,}0 \pm 0{,}2\ M_{2/n}O : Al_2O_3 : 1{,}85 \pm 0{,}5\ SiO_2 . yH_2O,$$

wobei M ein Metallkation, n seine Wertigkeit und y ein Wert bis zu 6 bedeuten.

Zeolith A gewinnt in zunehmendem Maße an Bedeutung als Phosphatsubstitut in Waschmitteln. Für diesen Anwendungszweck ist es wünschenswert, daß das kristalline Zeolithpulver des Typs A eine möglichst einheitliche Teilchengröße, d. h. eine möglichst enge Teilchengrößenverteilungskurve, aufweist.

Die DE-A 26 51 436 beschreibt ein Verfahren zur Herstellung eines kristallinen Zeolithpulvers des Typs A mit 50 Gew.-% unter höchstens 4,3 Mikrometer liegenden Teilchen. Dabei wird eine wässrige Natriumaluminatlauge vorgelegt, zu der unter Rühren eine Alkalisilikatlösung zudosiert wird. Man erhält eine klare Reaktionsmischung der Zusammensetzung $SiO_2/Al_2O_3$ von 50 bis 1 000, $Na_2O/SiO_2$ von 0,2 bis 20 und $H_2O/Na_2O$ von 4 bis 300. Anschließend wird zu dieser Reaktionsmischung eine Natriumaluminatlauge hinzugegeben.

Die DE-A 26 51 420 beschreibt ein Verfahren zur Herstellung eines kristallinen Zeolithpulvers des Typs A mit 50 Gew.-% unter höchstens 6,2 Mikrometer liegenden Teilchen. Das Verfahren wird durchgeführt, indem man eine Natriumaluminatlauge vorlegt und unter Rühren eine Wasserglaslösung hinzudosiert. Zu der trüben Reaktionsmischung der Zusammensetzung $SiO_2/Al_2O_3$ von 2 bis 50, $Na_2O/SiO_2$ von 0,2 bis 20 und $H_2O/Na_2O$ von 4 bis 300 wird in zwei Stufen eine Natriumaluminatlauge unter Rühren hinzugegeben.

Die DE-A 27 34 296 beschreibt ein Verfahren zur Herstellung von feinteiligen, zum Kationenaustausch befähigten wasserunlöslichen Silikaten, mit einem beispielsweise zwischen 3 und 5 Mikrometer liegenden Maximum der Teilchengrößenverteilung. Das Verfahren wird derart durchgeführt, daß man Wasserglaslösung vorlegt und Natriumaluminatlösung hinzugibt. Anschließend wird die Reaktionsmischung erhitzt.

Die DE-A 27 04 310 beschreibt ein Verfahren zur Herstellung von feinteiligen zum Kationenaustausch befähigten Silikaten, bei dem man wässrige Alkalialuminatlauge mit wässriger Alkalisilikatlösung in Gegenwart von überschüssigem Alkali vermischt und die Reaktionsmischung gegebenenfalls recyclierend durch eine Zerkleinerungsvorrichtung führt.

Der Gegenstand der Erfindung ist ein Verfahren zur Herstellung von kristallinem Zeolithpulver des Typs A mit einem mittleren Teilchendurchmesser von 8,5 bis 9,0 μm, durch Umsetzung von Natriumaluminatlauge mit Wasserglaslösung, welches dadurch gekennzeichnet ist, daß man zur Herstellung eines Zeolithpulvers 0,5 bis 2,5 Volumenteile einer Natriumaluminatlauge mit einer Konzentration von 20 bis 120, vorzugsweise 30 bis 100 g/l $Na_2O$ und 5 bis 50, vorzugsweise 10 bis 30 g/l $Al_2O_3$, welche gegebenenfalls mit derselben Volumenmenge Wasser verdünnt ist, gleichzeitig unter Rühren bei einer Temperatur von 30 bis 70 °C mit 0,1 bis 0,6 Volumenteile einer Wasserglaslösung mit einer Konzentration von 90 bis 120, vorzugsweise 100 bis 110 g/l $Na_2O$ und 330 bis 380, vorzugsweise 340 bis 370 g/l $SiO_2$, welche gegebenenfalls mit Wasser auf 3 Volumenteile verdünnt ist, in eine Vorlage aus 8 bis 12 Volumenteilen einer Natriumaluminatlauge mit einer Konzentration von 50 bis 200 g/l $Na_2O$ und 30 bis 150 g/l $Al_2O_3$, während eines Zeitraumes von 8 bis 15 Minuten hineingibt, anschließend über einen Zeitraum von 25 bis 45 Minuten rührt, weitere 15 bis 20 Volumenteile derselben Natriumaluminatlauge, sowie anschließend weitere 3,0 bis 3,5 Volumenteile derselben Wasserglaslösung während eines Zeitraumes von 8 bis 15 Minuten hinzufügt, gegebenenfalls die Reaktionsmischung weitere 20 bis 180 Minuten bei einer Temperatur von 75 bis 100 °C rührt, abkühlt und das kristalline Reaktionsprodukt abfiltriert und trocknet.

Das mittels dem erfindungsgemäßen Verfahren erhaltene kristalline Zeolithpulver des Typs A weist das enge Teilchenspektrum mit einem mittleren Teilchendurchmesser von 8,5 bis 9,0 μm auf und kann vorteilhaft als Phosphatsubstitut in Waschmittels eingesetzt werden.

Beispiel 1

In einem Reaktionsgefäß werden 10 l Natriumaluminatlauge mit einer Konzentration von 70 g/l $Na_2O$ und 41 g/l $Al_2O_3$ vorgelegt. Bei einer Temperatur von 65 °C werden gleichzeitig unter Rühren 2 l Natriumaluminatlauge mit einer Konzentration von 116 g/l $Na_2O$ und 80 g/l $Al_2O_3$ und 0,56 l Wasserglaslösung mit einer Konzentration von 104 g/l $Na_2O$ und 380 g/l $SiO_2$, welche mit 1,44 l Wasser verdünnt ist, während eines Zeitraumes von 10 Minuten in die Vorlage gegeben. Anschließend wird die Reaktionsmischung bei einer Temperatur von 65 °C 30 Minuten gerührt. Anschließend werden 18 l Natriumaluminatlauge derselben Konzentration und danach 3,04 l Wasserglaslösung derselben Konzentration innerhalb eines Zeitraumes von 10 Minuten bei einer Temperatur von 65 °C und unter Rühren

hinzugegeben. Die Reaktionsmischung wird anschließend noch 40 Minuten bei einer Temperatur von 90 °C gerührt und anschließend abgekühlt. Das kristalline Reaktionsprodukt (Zeolith A) wird abfiltriert und getrocknet.

Die Teilchengrößenverteilung wird mit dem Coulter Counter bestimmt. Es ergeben sich die folgenden Werte.

| | | |
|---|---|---|
| > 9,0 | µm | 50 Gew.-% |
| > 10 | µm | 27 Gew.-% |
| > 15 | µm | 3 Gew.-% |

Der Gritgehalt (Teilchen über 45 µm) beträgt nach Mocker 0,064 Gew.-%. Das Calciumbindevermögen beträgt 162 mg CaO/g Zeolith A.

**Anspruch**

Verfahren zur Herstellung von kristallinem Zeolithpulver des Typs A mit einem mittleren Teilchendurchmesser von 8,5 bis 9,0 µm, durch Umsetzung von Natriumaluminatlauge mit Wasserglaslösung, dadurch gekennzeichnet, daß man zur Herstellung einer Zeolithpulvers 0,5 bis 2,5 Volumenteile einer Natriumaluminatlauge mit einer Konzentration von 20 bis 120 g/l $Na_2O$ und 5 bis 50 g/l $Al_2O_3$, welche gegebenenfalls mit derselben Volumenmenge Wasser verdünnt ist, gleichzeitig unter Rühren bei einer Temperatur von 30 bis 70 °C mit 0,1 bis 0,6 Volumenteilen einer Wasserglaslösung mit einer Konzentration von 90 bis 120 g/l $Na_2O$ und 330 bis 380 g/l $SiO_2$, welche gegebenenfalls mit Wasser auf 3 Volumenteile verdünnt ist, in eine Vorlage aus 8 bis 12 Volumenteilen einer Natriumaluminatlauge mit einer Konzentration von 50 bis 200 g/l $Na_2O$ und 30 bis 150 g/l $Al_2O_3$ während eines Zeitraumes von 8 Minuten bis 15 Minuten hineingibt, anschließend über einen Zeitraum von 25 bis 45 Minuten rührt, weitere 15 bis 20 Volumenteile derselben Natriumaluminatlauge, sowie anschließend weitere 3,0 bis 3,5 Volumenteile derselben Wasserglaslösung während eines Zeitraumes von 8 bis 15 Minuten hinzufügt, gegebenenfalls die Reaktionsmischung weitere 20 bis 180 Minuten bei einer Temperatur von 75 bis 100 °C rührt, abkühlt und das kristalline Reaktionsprodukt abfiltriert und trocknet.

**Claim**

A process for the production of a crystalline powder of the zeolite A type, by the reaction of sodium aluminate liquor with water glass solution, characterised in that for the production of a zeolite powder having an average particle diameter of from 8.5 to 9.0 µm, from 0.5 to 2.5 parts by volume of a sodium aluminate liquor having a concentration of from 20 to 120 g/l of $Na_2O$ and from 5 to 50 g/l of $Al_2O_3$ which may be diluted with the same volume of water, from 0.1 to 0.6 parts by volume of a water glass solution having a concentration of from 90 to 120 g/l of $Na_2O$ and from 330 to 380 g/l of $SiO_2$ which may be diluted with three parts by volume of water are simultaneously added to a starting solution of from 8 to 12 parts by volume of a sodium aluminate liquor having a concentration of from 50 to 200 g/l of $Na_2O$ and from 30 to 150 g/l of $Al_2O_3$ over a period of from 8 to 15 minutes with stirring at a temperature of from 30 to 70 °C, the mixture is then stirred for 25 to 45 minutes, a further 15 to 20 parts by volume of the same sodium aluminate liquor and a further 3.0 to 3.5 parts by volume of the same water glass solution are then added over a period of from 8 to 15 minutes, the reaction mixture may then be stirred for a further 20 to 180 minutes at a temperature of from 75 to 100 °C, cooled and the crystalline product is filtered and dried.

**Revendication**

Procédé pour la fabrication de zéolite cristalline du type A en poudre, par réaction d'une solution d'aluminate de sodium avec une solution de silicate de sodium, caractérisé en ce que, pour fabriquer une zéolite en poudre avec un diamètre moyen des particules de 8,5 à 9 microns, on introduit, en l'espace de 8 à 15 min, dans une charge préalable de 8 à 12 parties en volume d'une solution d'aluminate de sodium avec une concentration de 50 à 200 g/l de $Na_2O$ et 30 à 150 g/l d'$Al_2O_3$, 0,5 à 2,5 parties en volume d'une solution d'aluminate de sodium avec une concentration de 20 à 120 g/l de $Na_2O$ et 5 à 50 g/l, d'$Al_2O_3$, qui est éventuellement diluée avec la même quantité en volume d'eau, en même temps qu'on introduit, en agitant, à une température de 30 à 70 °C, 0,1 à 0,6 parties en volume d'une solution de silicate de sodium avec une concentration de 90 à 120 g/l de $Na_2O$ et 330 à 380 g/l de $SiO_2$, que l'on a diluée éventuellement avec de l'eau à 3 parties en volume, on agite ensuite pendant une durée de 25 à 45 min, ajoute encore 15 à 20 parties en volume de la même solution d'aluminate de sodium ainsi qu'ensuite encore 3 à 3,5 parties en volume de la même solution de silicate de sodium en l'espace de 8 à 15 min, agite éventuellement le mélange réactionnel pendant une nouvelle durée de 20 à 180 minutes, à une température de 75 à 100 °C, refroidit, reprend par filtration le produit cristallin de la réaction et sèche.